# DEMANDE DE BREVET EUROPEEN

(11) **EP 4 339 021 A1**
(43) Date de publication de la demande: **20.03.2024**
(21) Numéro de dépôt: 23196717.5
(22) Date de dépôt: 12.09.2023
(51) Int. Cl.: B60P 7/135

(54) **DISPOSITIF D'ARRIMAGE DE CHARGES, NOTAMMENT DE BALLES DE FOURRAGE, SUR UN VÉHICULE DE TRANSPORT DE CHARGES, ET VÉHICULE DE TRANSPORT DE CHARGES COMPRENANT AU MOINS UN TEL DISPOSITIF D ARRIMAGE**

(30) Priorité: 13.09.2022 FR 2209188
(71) Demandeur: Sarl Ponge Père et Fils, 58420 Guipy (FR)
(72) Inventeur: PONGE, Sébastien, 58330 Saxi Bourdon (FR)
(74) Mandataire: Cabinet Chaillot

(57) **Abrégé**

L'invention concerne un dispositif d'arrimage (D) de charges sur un véhicule (V), lequel dispositif d' arrimage (D) comprend au moins un élément longiligne souple (1) dont les deux extrémités longitudinales sont couplées à une paire de montants (2), le ou chaque élément longiligne souple (1) s'étendant horizontalement entre lesdits montants (2), au moins l'une des extrémités longitudinales du ou de chaque élément longiligne souple (1) étant couplée au montant (2) respectif par un ensemble de liaison (3) solidaire de ladite extrémité longitudinale et coopérant avec ledit montant (2). Le ou chaque ensemble de liaison (3) est monté mobile en translation par rapport au montant (2) par l'intermédiaire d'une liaison glissière selon une direction orthogonale à un axe longitudinal du montant (2) et parallèle au plan comprenant la paire de montants (2). L'invention concerne également un véhicule (V) de transport de charges comprenant au moins un tel dispositif d'arrimage (D).

## Description

Le domaine technique de l'invention est celui du transport routier de charges, telles que des balles de fourrage (paille, foin, ensilage, chanvre, etc.) de grandes dimensions, et plus généralement de toute marchandise de grandes dimensions (par exemple, rouleaux de câbles ou de tuyaux ou balles cylindriques de papier ou autre matériau) susceptible d'être transportée sur un véhicule de transport, et notamment un véhicule de type remorque routière.

Plus précisément, l'invention concerne l'arrimage et le maintien de ces charges sur un véhicule de transport de charges.

La sécurité ainsi que la nécessité de protéger l'intégrité des charges exigent que celles-ci soit arrimées sur le véhicule. En effet, il est nécessaire d'empêcher les déplacements des charges sur le véhicule afin d'éviter toute chute desdites charges hors du véhicule, ainsi que d'empêcher les chocs entre charges et contre la structure du véhicule, en particulier en cas de freinage brusque, de secousses dues à l'état de la chaussée ou de choc dû à un accident.

A cet effet, il est connu de transporter des charges sur un véhicule de transport comprenant un plateau sur lequel les charges sont placées, le véhicule comprenant un système de barrières latérales pour maintenir en place les charges.

Un tel système de barrières latérales est, par exemple, décrit dans le brevet français FR3081284 B1, qui décrit un plateau comportant au moins deux barrières, sous la forme de barres rigides, montées sur le châssis et aptes à bloquer les charges en coinçant les charges entre elles.

Un autre système de barrières latérales connu est décrit dans le brevet européen EP3173286 B1. Ce brevet décrit un véhicule de transport de charges, notamment de ballots, comprenant une plate-forme de chargement sur laquelle sont agencées latéralement deux parois latérales, au moins l'une des parois latérales consistant en une structure de grille présentant plusieurs barres rigides horizontales reliées à au moins deux barres rigides verticales montées de façon pivotante sur la plate-forme de chargement.

Cependant, ces systèmes de barrières latérales sont des structures rigides et généralement métalliques. De ce fait, ces systèmes n'épousent pas la forme latérale des charges et ne permettent donc pas un maintien optimal de celles-ci. En outre, ces systèmes rigides sont susceptibles d'endommager les charges. Par ailleurs, de tels systèmes peuvent engendrer des bruits, notamment lors d'un transport à vide ou lors d'un transport de charges métalliques.

Afin de pallier ces inconvénients, il est également connu de maintenir en place des charges sur la plate-forme d'un véhicule à l'aide de structures souples.

On connaît, par exemple par le brevet américain US9931973 B2, un véhicule de type remorque équipé d'une paire de structures latérales de maintien de charges, chaque structure latérale comprenant une paire de montants d'extrémité et une pluralité de câbles couplés à ces montants et s'étendant entre ceux-ci. Les câbles sont maintenus sous tension entre les montants par l'intermédiaire de tendeurs classiques.

Bien qu'une telle structure souple ne présente pas les inconvénients des structures rigides et a l'avantage d'être moins lourde et moins coûteuse que les systèmes de barrières rigides latérales, elle présente l'inconvénient d'un risque de perte de tension dans la structure souple, à savoir les câbles, pendant le transport, en particulier en cas de secousses. Ainsi, avec une telle structure souple, il existe un risque de mauvais calage des charges. En outre, la structure souple décrite dans ce brevet américain n'est pas réglable en longueur et ne peut donc pas s'adapter facilement à diverses dimensions de charges.

La présente invention a pour but de remédier à ces inconvénients en proposant un dispositif d'arrimage de charges sur un véhicule de transport de charges qui permet une retenue latérale permanente et fiable des charges, qui ne risque pas d'endommager les charges, qui est ajustable en longueur pour s'adapter à diverses dimensions de charges, et qui est facile et rapide à installer.

La présente invention propose également un véhicule de transport de charges équipé d'au moins un tel dispositif d'arrimage de charges, lequel véhicule est alors polyvalent, pouvant s'adapter à différentes hauteurs de chargement, à chargement et déchargement aisés, et d'utilisation aisée et rapide.

La présente invention a pour objet un dispositif d'arrimage de charges, notamment de balles de fourrage, sur un véhicule de transport de charges, lequel dispositif d' arrimage comprend au moins un élément longiligne souple dont les deux extrémités longitudinales sont couplées à une paire de montants verticaux parallèles, les montants étant espacés l'un de l'autre de telle sorte que le ou chaque élément longiligne souple s'étend horizontalement entre lesdits montants, au moins l'une des extrémités longitudinales du ou de chaque élément longiligne souple étant couplée au montant respectif par l'intermédiaire d'un ensemble de liaison, lequel ensemble de liaison est solidaire de ladite extrémité longitudinale et coopère avec ledit montant, caractérisé par le fait que le ou chaque ensemble de liaison est monté mobile en translation par rapport au montant par l'intermédiaire d'une liaison glissière selon une direction orthogonale à un axe longitudinal du montant et parallèle au plan comprenant la paire de montants.

Une telle liaison glissière permet à la distance entre l'ensemble de liaison et le montant de pouvoir varier tout en empêchant la rotation de l'ensemble de liaison par rapport au montant. Autrement dit, la liaison glissière permet un coulissement de l'ensemble de liaison par rapport au montant. Ainsi, le déplacement en translation du ou des ensembles de liaison solidaires d'un élément longiligne souple permet le réglage de la longueur de cet élément longiligne souple.

L'élément longiligne souple présente l'avantage de s'adapter facilement à la forme de la ou des charges et d'en épouser le contour, contrairement à un élément rigide. Un tel élément souple permet donc un meilleur maintien des charges. En outre, un tel élément souple permet d'éviter le bruit qui pourrait être engendré lors d'un transport à vide avec un élément rigide métallique. Enfin, un tel élément souple est de coût réduit.

De préférence, un ensemble de liaison est prévu à chacune des deux extrémités longitudinales du ou de chaque élément longiligne souple.

De préférence, pour le ou chaque élément longiligne souple, un organe de mise sous tension est agencé entre le ou au moins l'un des ensembles de liaison et le montant correspondant de manière à tendre à rapprocher l'extrémité longitudinale correspondante de l'élément longiligne souple du montant.

Avantageusement, l'organe de mise sous tension est un organe de sollicitation élastique, tel que notamment un ressort de compression, un ressort de traction, un ressort rotatif ou un vérin hydraulique, agissant sur l'ensemble de liaison de manière à solliciter l'ensemble de liaison vers une extension minimale de l'ensemble de liaison entre l'extrémité longitudinale de l'élément longiligne et le montant.

Un tel organe de mise sous tension permet à l'élément longiligne souple d'être tendu en permanence, à la tension maximale permise, et de manière automatique. De ce fait, en utilisation, cela permet à l'élément longiligne souple de venir en appui sur le chargement, pour un blocage optimal. En particulier, l'utilisation d'un ressort de compression permet d'appliquer une force de tension constante à l'ensemble de liaison et donc à l'élément longiligne souple.

Dans un mode de réalisation particulier, le ou chaque ensemble de liaison comprend un organe mobile formant coulisseau et un organe de réglage solidaire de l'organe mobile et coopérant avec le montant correspondant de manière à limiter le déplacement en translation de l'ensemble de liaison par rapport au montant, la liaison glissière comportant des orifices traversants formant coulisse prévus le long du montant correspondant et agencés de manière à recevoir de manière coulissante l'organe mobile et l'organe de réglage.

De préférence, chaque montant comporte une pluralité d'orifices traversants espacés le long de la direction longitudinale du montant, de manière à permettre le positionnement du ou de chaque ensemble de liaison à différentes hauteurs. Ainsi, le dispositif est facilement adaptable à la hauteur du chargement à transporter.

De préférence, deux orifices traversants analogues consécutifs, à savoir deux orifices destinés à recevoir une même partie de l'ensemble de liaison, sont espacés d'un pas constant de 150 mm.

De préférence, l'organe de réglage est un ensemble vis-écrou comprenant une vis traversant le montant selon un axe parallèle à la direction de translation, et un écrou vissé sur la vis, le montant étant interposé entre une tête de la vis et l'écrou, l'un ou l'autre parmi la tête de la vis et l'écrou étant solidaire de l'organe mobile.

Dans le cas où l'organe de mise sous tension est un ressort, par exemple de compression, le ressort est traversé par la vis et est relié d'une part au montant et d'autre part à l'organe de réglage.

Un tel ensemble vis-écrou permet de retenir l'organe mobile dans les orifices du montant tout en permettant un réglage rapide et aisé de la course d'extension de la liaison glissière, donc un réglage aisé et rapide de la longueur de l'élément longiligne souple. La tête de la vis et l'écrou constituent des moyens de butée simples.

En outre, un tel ensemble vis-écrou peut être facilement démonté et remonté, notamment à l'aide d'une clé, permettant ainsi de séparer l'ensemble de liaison du montant afin de le repositionner à une autre position souhaitée sur le montant.

De préférence, l'organe mobile est une pièce en forme de U comprenant deux doigts de guidage, parallèles entre eux et orientés selon la direction de translation, les deux doigts étant interconnectés par un axe parallèle à l'axe longitudinal du montant et auquel est reliée l'extrémité longitudinale correspondante de l'élément longiligne souple.

De préférence, l'extrémité longitudinale de l'élément longiligne souple est reliée à l'organe mobile par l'intermédiaire d'une boucle formée à ladite extrémité, laquelle boucle est montée autour de l'axe, l'axe étant en forme de boulon et étant pris dans des oeillets formés sur chaque doigt de guidage. Un tel agencement de liaison entre l'élément longiligne souple et l'organe mobile permet des montage et démontage pratiques et aisés dudit élément longiligne souple. Par conséquent, l'élément souple peut être facilement remplacé par un autre élément souple, en particulier pour s'adapter aux dimensions des charges à arrimer.

Dans un mode de réalisation particulier dans lequel au moins un organe de mise sous tension est associé à l'au moins un élément longiligne souple, le ou chaque élément longiligne souple est avantageusement une sangle.

Une telle sangle présente les avantages d'être peu coûteuse et de ne pas endommager les charges lorsque la sangle vient en contact étroit contre les charges.

En variante, le ou chaque élément longiligne souple pourrait être un câble, une corde ou analogue.

De préférence, le dispositif d'arrimage comprend une pluralité d'éléments longilignes souples, de préférence, deux éléments longilignes souples, espacés verticalement les uns des autres. En particulier, dans le cas de deux éléments longilignes souples, à savoir un élément inférieur et un élément supérieur, l'espacement vertical entre les deux éléments peut être choisi de telle sorte que, en utilisation, l'élément inférieur est apte à venir en appui contre un étage de charges empilées et l'élément supérieur est apte à venir en appui contre un autre étage de charges empilées.

La présente invention a également pour objet un véhicule de transport de charges, notamment de balles de fourrage, le véhicule comprenant une plate-forme de chargement ayant une extrémité avant, une extrémité arrière et deux côtés latéraux s'étendant entre les extrémités avant et arrière, le véhicule étant caractérisé par le fait qu'il comprend au moins un dispositif d'arrimage de charges tel que défini ci-dessus, de préférence deux dispositifs d'arrimage, le ou chaque dispositif d'arrimage s'étendant le long d'un côté latéral respectif de la plate-forme de chargement, chaque montant étant relié à la plateforme de chargement par l'intermédiaire d'un ensemble pivotant respectif, de telle sorte que le ou chacun des dispositifs est monté mobile vis-à-vis de la plate-forme de chargement entre une position de chargement, dans laquelle le dispositif est positionné au-dessous de la plate-forme, et au moins une position de transport, dans laquelle le dispositif est positionné au-dessus de la plateforme.

Un tel véhicule selon l'invention permet un arrimage latéral des charges sur la plate-forme de chargement, pour un transport sécurisé de celles-ci.

En utilisation, en position de transport, les dispositifs d'arrimage permettent de retenir les charges sur la plate-forme de chargement et d'empêcher les charges de se déplacer latéralement et de tomber hors du véhicule. En position de chargement, les dispositifs d'arrimage permettent d'accéder à la plate-forme de chargement et facilitent le chargement des charges sur la plate-forme de chargement ou leur déchargement.

Dans le cas où le dispositif d'arrimage comporte, pour le ou chaque élément longiligne souple, un organe de mise sous tension, cela permet d'éviter que ledit élément longiligne souple se détende lors de son déplacement de sa position de chargement à sa position de transport et arrive vrillé contre les charges. Ainsi, un mauvais arrimage latéral, le cas échéant un mauvais sanglage latéral, et une usure prématurée de l'élément longiligne souple sont évités.

De préférence, chaque montant est apte à être est relié de manière démontable à l'ensemble pivotant respectif au niveau de l'une ou l'autre des extrémités du montant, au besoin.

Un tel montage démontable permet de changer le sens de montage du montant, l'extrémité haute du montant pouvant devenir l'extrémité basse du montant après retournement de celui-ci. Le retournement des deux montants d'une même paire de montants permet ainsi, sans avoir besoin de déplacer le ou les éléments longilignes souples le long des montants, d'augmenter les possibilités de position en hauteur des éléments longilignes souples.

Par exemple, dans le cas du transport de balles de fourrage, on pourra placer les montants dans une première configuration pour le transport de balles de fourrage disposées sur trois rangs, première configuration dans laquelle les montants sont orientés de de telle sorte que les éléments longilignes souples sont en appui contre les deux rangs supérieurs. Lorsque l'on souhaite transporter des balles de fourrage disposées sur deux rangs seulement, il suffira de retourner les montants pour la placer dans une deuxième configuration, dans laquelle les éléments longilignes souples sont en appui contre les deux rangs de balles de fourrage.

Avantageusement, le véhicule de transport est un véhicule non automoteur sur roues, de type remorque, destiné à être tracté par un véhicule tracteur.

Dans un mode de réalisation particulier, chaque ensemble pivotant comprend une paire de bras parallèles, de même longueur et ayant chacun des première et seconde extrémités articulées respectivement à un support solidaire d'une extrémité de la plateforme de chargement et au montant correspondant de façon à former avec le montant un parallélogramme déformable, chaque ensemble pivotant comprenant en outre un vérin articulé entre le support et l'un des bras, de telle sorte qu'une rétraction ou une extension du vérin provoque le pivotement de la paire de bras autour de leurs premières extrémités et le déplacement du montant entre les positions de chargement et de transport, les vérins associés aux montants d'un même dispositif d'arrimage étant synchronisés, deux ensembles pivotants agencés à une même extrémité de la plate-forme étant reliés à un même support.

Chaque ensemble pivotant ayant son propre actionneur, les deux ensembles pivotants reliés à la paire de montants de l'un des dispositifs d'arrimage peuvent être déplacés indépendamment des deux ensembles pivotants reliés à la paire de montants de l'autre dispositif d'arrimage. Ainsi, les deux dispositifs d'arrimage peuvent être placés dans une même position ou l'un des dispositifs d'arrimage peut être placé en position de chargement tandis que l'autre dispositif d'arrimage est placé en position de transport. En outre, de tels ensembles étant actionnés par des vérins, le passage des dispositifs d'arrimage d'une position à une autre est aisé et rapide et peut être répété de nombreuses fois sans nécessiter un quelconque effort de la part d'un utilisateur.

Avantageusement, chaque support est monté mobile en hauteur par rapport à la plate-forme de chargement par l'intermédiaire d'un ensemble formant ascenseur, lequel ensemble formant ascenseur comprend un actionneur vertical, notamment un vérin vertical, monté entre la plate-forme de chargement et le support, une paire de rails de guidage verticaux fixés à l'extrémité correspondante de la plate-forme et un chariot monté mobile en translation verticale le long des rails, le support étant solidaire du chariot, de telle sorte qu'un déplacement de l'actionneur provoque un déplacement en translation verticale du support par rapport à la plate-forme entre une position basse et un position haute, les actionneurs verticaux associés à chacun des deux supports étant synchronisés.

De préférence, le chariot comprend une paire de traverses mobiles agencées l'une au-dessus de l'autre, chaque traverse portant une roulette à chacune de ses deux extrémités apte à être reçue et guidée dans un rail correspondant, l'une des traverses étant solidaire de l'extrémité haute du support et l'autre traverse étant solidaire de l'extrémité basse du support.

En variante, chaque support pourrait être monté fixe par rapport à la plate-forme.

L'avantage d'un support mobile par rapport à un support fixe est de permettre un meilleur réglage en hauteur de la position des dispositifs d'arrimage afin de s'adapter davantage à des hauteurs de charges de différentes hauteurs.

Pour mieux illustrer l'objet de la présente invention, deux modes de réalisation particuliers du véhicule sont décrits ci-après, avec référence aux dessins annexés. Sur ces dessins :
[Fig. 1] est une vue d'ensemble, en perspective, du véhicule de transport de charges selon un premier mode de réalisation de la présente invention, lequel véhicule est équipé de deux dispositifs d'arrimage de charges latéraux ;
[Fig. 2] est une vue de côté du véhicule de la Figure 1, lors du transport de charges, des balles de fourrage étant représentées en pointillés ;
[Fig. 3] est une vue en perspective agrandie du dispositif d'arrimage selon la présente invention, au niveau de l'un des deux montants ;
[Fig. 4] est une vue de côté du dispositif d'arrimage de la Figure 3, au niveau d'un ensemble de liaison ;
[Fig. 5] est une vue en perspective de l'ensemble de liaison de la Figure 4 et de l'organe de mise sous tension associé ;
[Fig. 6] est une vue en perspective d'un montant seul du dispositif de la Figure 3 ;
[Fig. 7] est une vue de derrière du véhicule de la Figure 1, les dispositifs d'arrimage étant placés en position de transport ;
[Fig. 8] est une vue de derrière du véhicule de la Figure 1, les dispositifs d'arrimage étant placés en position de chargement ;
[Fig. 9] est une vue de côté du véhicule de transport de charges selon un deuxième mode de réalisation de la présente invention, les dispositifs d'arrimage étant placés en position de chargement ;
[Fig. 10] est une vue en perspective, depuis la plate-forme de chargement du véhicule de la Figure 9, montrant l'agencement de montage des dispositifs d'arrimage à l'une des extrémités du véhicule, les dispositifs d'arrimage étant placés dans la position de transport la plus élevée ;
[Fig. 11] est une vue en perspective, depuis l'arrière du véhicule de la Figure 9, les dispositifs d'arrimage étant placés dans une position de transport de hauteur inférieure à la position la plus élevée ; et
[Fig. 12] est une vue de derrière du véhicule de la Figure 10.

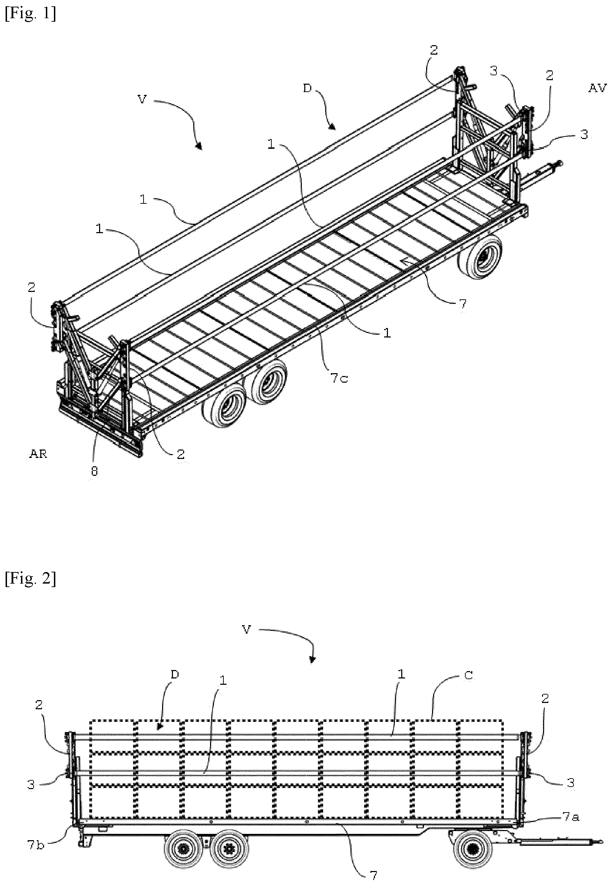

Si l'on se réfère tout d'abord aux Figures 1 et 2, on peut voir que le véhicule V de transport de charges C selon la présente invention est particulièrement adapté au transport de balles de fourrage, des balles de fourrage étant représentées en pointillés sur la Figure 2. Dans l'application représentée, des balles de fourrage sensiblement rondes sont empilées sur une certaine hauteur, en trois rangs superposés. Les dispositifs d'arrimage D de charges C portés par le véhicule V sont agencés de manière à venir en contact avec les balles de fourrage de chaque côté du véhicule V, notamment avec les balles des deux rangs supérieurs, afin d'éviter le déplacement transversal des balles de fourrage et leur chute hors du véhicule V.

Il convient toutefois de souligner que l'utilisation du véhicule V selon la présente invention n'est pas limitée à l'application représentée ni à l'industrie agricole, mais qu'il pourrait être utilisé pour le transport de charges C quelconques empilées sur le véhicule V.

Le véhicule V selon la présente invention comprend au moins un dispositif d'arrimage D de charges C. Dans le mode de réalisation préféré représenté, le véhicule V comprend deux dispositifs d'arrimage D positionnés de chaque côté du véhicule V. Toutefois, le véhicule V pourrait comprendre un seul dispositif d'arrimage D positionné sur l'un des deux côtés du véhicule V.

Le ou chaque dispositif d'arrimage D de charges C selon la présente invention comprend au moins un élément longiligne souple 1, une paire de montants verticaux 2, au moins un ensemble de liaison 3 pour le ou chaque élément longitudinal souple 1, et de préférence, au moins un organe de mise sous tension 4 pour le ou chaque élément longitudinal souple 1.

Comme on peut le voir sur les Figures 1 à 3, le ou chaque dispositif d'arrimage D selon la présente invention comprend au moins un élément longiligne souple 1, de préférence deux éléments longilignes souples 1. Toutefois, le nombre d'éléments longilignes souples 1 n'est pas limité à un ou deux, et pourrait être supérieur à deux. Le ou chaque élément longiligne souple 1 est destiné à venir en contact avec des charges C à transporter afin de les maintenir en place. En particulier, le ou chaque élément longiligne souple 1 est destiné à permettre un maintien latéral des charges C.

Dans le mode de réalisation préféré, chaque élément longiligne souple 1 est une sangle. Cette sangle 1 comprend une bande de tissu présentant deux faces opposées dont une face destinée à venir en appui contre les charges C et une face destinée à être dirigée à l'opposé des charges C. La sangle 1 a deux extrémités longitudinales 10. De préférence, chaque région d'extrémité longitudinale est repliée en forme de boucle, laquelle boucle est apte à être reliée à un ensemble de liaison 3. Chaque sangle 1 a une largeur, une épaisseur et une longueur qui sont choisies en fonction des dimensions des charges C à maintenir. La sangle 1 peut être réalisée en tissu de type nylon.

Dans la suite de la description, le ou chaque élément longiligne souple 1 est désigné par le terme « sangle ». Cependant, il convient de souligner que l'élément longiligne souple 1 n'est pas limité à une sangle et pourrait également être une corde, un câble ou toute autre bande de matière souple.

Comme on peut le voir sur les Figures 1 et 2, dans le cas d'une pluralité de sangles 1, les sangles 1 s'étendent parallèlement entre elles, les unes au-dessus des autres avec un certain espacement entre les sangles 1. Ces sangles 1 s'étendent entre les deux montants verticaux 2, dans le plan comprenant les deux montants 2. En d'autres termes, les sangles 1 s'étendent selon une direction horizontale, perpendiculaire à la direction verticale des montants 2.

La paire de montants 2 a ainsi pour fonction de supporter les sangles 1 et de les maintenir dans leur position étendue horizontale.

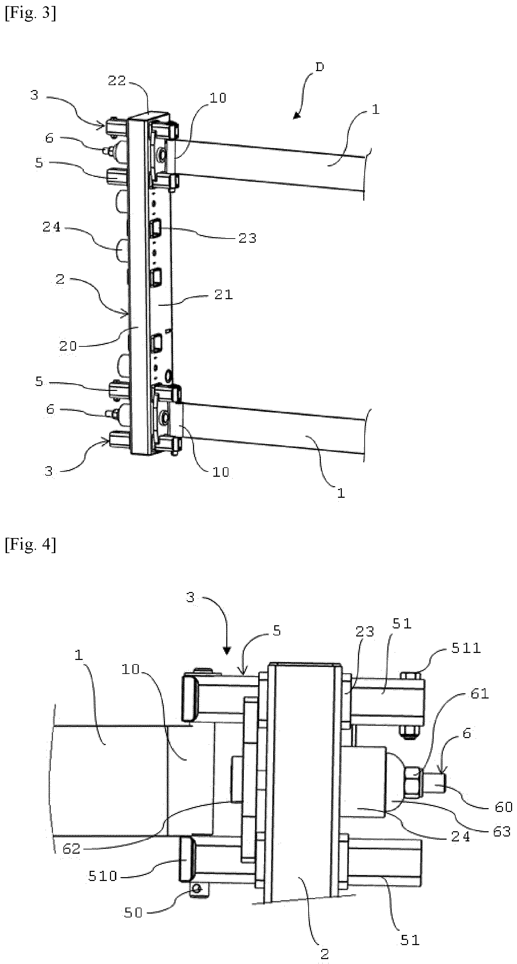

Les deux montants 2 sont disposés aux extrémités latérales du dispositif D. Les montants 2 sont parallèles entre eux et perpendiculaires à l'axe longitudinal des sangles 1 étendues. Comme on peut le voir sur la Figure 3, chaque montant 2 a un axe longitudinal, une extrémité basse et une extrémité haute. Chaque montant est réalisé sous la forme d'un profilé métallique tubulaire de section rectangulaire ayant deux petites faces opposées 20 et deux grandes faces 21 opposées. L'une des grandes faces 21 est dirigée vers la sangle 1. Les extrémités basse et haute sont des extrémités ouvertes qui sont fermées chacune par un bouchon 22.

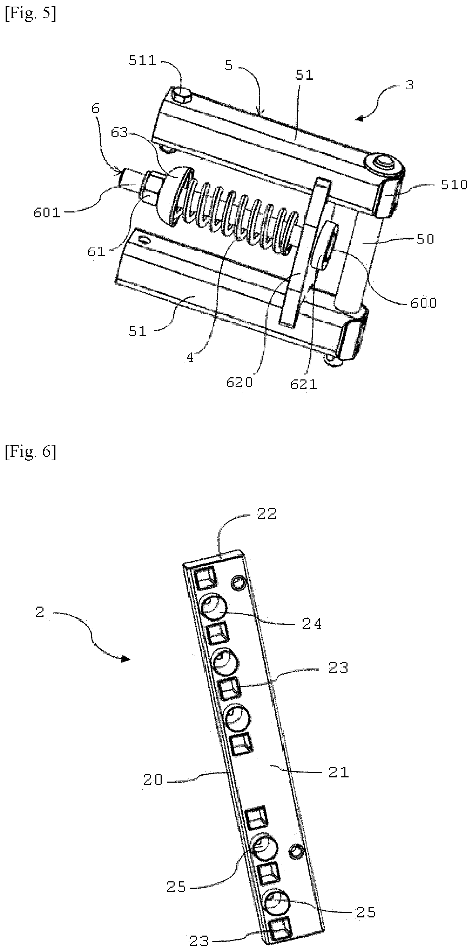

Chaque montant 2 comporte des orifices traversants 23, 24 qui débouchent sur chacune des grandes faces 21. Ces orifices traversants 23, 24 sont configurés pour recevoir l'ensemble de liaison 3 avec un jeu permettant le coulissement de l'ensemble de liaison 3 par rapport au montant 2. En particulier, comme on peut mieux le voir sur la Figure 6, chaque montant 2 comporte une pluralité de séries d'orifices 23, 24. Chaque série d'orifices 23, 24 comporte deux orifices de section rectangulaire ou carrée 23 et un orifice de section circulaire 24 interposé entre les deux orifices de section rectangulaire ou carrée 23. Dans le mode de réalisation représenté, chaque montant 2 comporte cinq orifices de section circulaire 24 et sept orifices de section carrée 23. Cela représente cinq positions possibles pour l'ensemble de liaison 3 et donc cinq possibilités de réglage en hauteur. Les deux orifices de section rectangulaire ou carrée 23 sont positionnés l'un au-dessus de l'autre et espacés l'un de l'autre. Les séries d'orifices 23, 24 sont régulièrement réparties le long du montant 2, entre les extrémités haute et basse du montant 2. Dans le mode de réalisation représenté, chaque orifice de section circulaire 24 est défini par un manchon tubulaire cylindrique qui s'étend d'une grande face 21 à l'autre du montant 2 et qui fait saillie au-delà de la grande face 21 opposée à la sangle 1. De la même manière, chaque orifice de section carrée ou rectangulaire 23 peut être défini par un tube à section carré ou rectangulaire qui s'étend à travers le montant 2, d'une grande face 21 à l'autre, et fait légèrement saillie de part et d'autre desdites faces 21 du montant 2.

A titre d'exemple, chaque montant 2 peut avoir une longueur de 1,185 mètre, une distance entre deux grandes faces 21 de 8 cm et une distance entre deux petites faces 20 de 18 cm. Chaque manchon tubulaire cylindrique 24 peut avoir une longueur de 12,5 cm, soit une longueur en saillie de 4,5 cm, et un diamètre de 76,1 mm. Chaque tube à section carrée 23 peut avoir une longueur de 10 cm, soit une longueur en saillie de 1 cm de part et d'autre du montant 2, et une section carrée de 60 mm par 60 mm. Dans la configuration dans laquelle le dispositif D comporte deux sangles 1, de préférence, ces deux sangles 1 sont espacées l'une de l'autre de 60 cm. La distance entre les deux montants 2 d'une même paire de montants 2 peut être d'environ 11,6 mètres et la largeur de chaque sangle 1 peut être de 12,5 cm.

De préférence, un ensemble de liaison 3 est prévu à chaque extrémité longitudinale 10 de chaque sangle 1 et permet de relier chacune desdites extrémités 10 au montant 2 correspondant. En particulier, chaque ensemble de liaison 3 et le montant 2 correspondant sont configurés pour obtenir une liaison glissière entre l'ensemble de liaison 3 et le montant 2. Une telle liaison glissière permet de guider en translation l'ensemble de liaison 3 par rapport au montant 2, et donc de déplacer la sangle 1 par rapport au montant 2 dans la direction de la longueur de la sangle 1.

Comme on peut le voir sur les Figures 3 à 5, l'ensemble de liaison 3 selon la présente invention comprend un organe mobile 5 formant coulisseau et un organe de réglage 6.

L'organe mobile 5 formant coulisseau se présente sous la forme d'une pièce en forme de U. Une base lie deux branches orientées à 90 degrés par rapport à cette base. La base du U est un axe 50 positionné parallèlement à l'axe longitudinal du montant 2. L'axe 50 peut être en forme de boulon dont la tige traverse les extrémités en regard de chaque branche. Cette tige est dimensionnée de manière à être reçue dans la boucle formée à l'extrémité longitudinale 10 de la sangle 1. En d'autres termes, la longueur de tige s'étendant entre les deux branches est sensiblement égale à la largeur de la sangle 1. Ainsi, si l'on souhaite remplacer la sangle 1, il suffit de démonter l'axe 50 et de retirer la boucle de la sangle 1. En variante, l'axe 50 peut être en forme de tige centrale montée dans une douille et maintenue en place par des goupilles radiales. Dans ce cas, la douille s'étend entre les deux branches et la tige, est de longueur supérieure à la longueur de la douille, et fait saillie de part et d'autre des branches. Un tel axe 50 est également facilement séparable vis-à-vis des branches.

Les branches du U sont formées par des doigts de guidage 51. Chaque doigt de guidage 51 a une extrémité reliée à l'axe 50 et une extrémité libre opposée. L'extrémité reliée à l'axe 50 comporte un oeillet pour le passage de la tige de l'axe 50. Les deux doigts de guidage 51 sont parallèles entre eux et perpendiculaires à l'axe longitudinal du montant 2. Le plan comprenant la pièce en U est perpendiculaire aux grandes faces 21 du montant 2. Chaque doigt de guidage 51 a une section carrée ou rectangulaire dimensionnée de telle sorte que le doigt de guidage 51 est apte à coulisser à l'intérieur de l'orifice de section carrée ou rectangulaire 23 correspondant du montant 2. Chaque doigt 51 peut se présenter sous la forme d'un tube à section carrée ou rectangulaire dont l'extrémité ouverte côté sangle 1 est fermée par un bouchon 510. L'organe mobile 5 est monté par rapport au montant 2 de telle sorte que l'axe 50 se situe dans l'espace formé entre les deux montants 2 et que l'extrémité libre de chaque doigt de guidage 51 peut faire saillie au-delà de la face du montant 2 opposée à la face côté sangle 1. Ainsi l'organe mobile 5 est monté mobile en translation par rapport au montant 2 selon une direction de translation qui est parallèle au plan comprenant les deux montants 2. Un boulon 511 peut être prévu à l'extrémité libre de l'un des deux doigts de guidage 51. Ce boulon 511 traverse le doigt 51 parallèlement à l'axe longitudinal du montant 2. L'écrou et la tête du boulon 511 font saillie de part et d'autre du doigt de guidage 51 et ne sont pas aptes à être reçus dans l'orifice 23 du montant 2 recevant le doigt de guidage 51. Ainsi, ce boulon 511 sert de butée de sécurité, empêchant l'organe mobile 5 de se séparer du montant 2 lors d'une translation de l'organe mobile 5 en direction du montant 2 opposé.

L'organe de réglage 6 est un ensemble vis-écrou. Cet organe de réglage 6 a pour fonction de définir et de limiter la course de déplacement en translation de l'organe mobile 5 par rapport au montant 2. L'organe de réglage 6 comprend une vis 60 solidaire de l'organe mobile 5 et un écrou 61 monté mobile par rapport à la vis 60. Plus précisément, la vis 60 a une tête 600 et une tige 601. La tête 600 est solidaire d'une entretoise 62 reliant entre eux les deux doigts de guidage 51. L'entretoise 62 comporte une plaque 620 et un insert 621 formés d'un seul tenant, l'insert 621 étant solidaire de la face de la plaque 620 côté sangle 1. La tige 601 traverse un orifice central pratiqué dans la plaque 620 de sorte que la tête 600 est logée dans l'insert 621. L'insert 621 présente un orifice complémentaire du contour de la tête 600, notamment un orifice hexagonal. Cette complémentarité permet d'empêcher la rotation de la vis 60 autour de l'axe de sa tige 601. La plaque 620 s'étend parallèlement à l'axe 50 et est positionnée au voisinage de l'axe 50. Ainsi, à l'état monté, l'entretoise 62 s'étend entre l'axe 50 et le montant 2. La tige 601 est une tige filetée qui s'étend parallèlement aux doigts de guidage 51, traverse un orifice de section circulaire 24 correspondant du montant 2 et fait saillie au-delà de la face du montant 2 opposée à la sangle 1. L'écrou 61 est monté autour de la tige 601, en particulier, autour de la région de la tige 601 qui fait saillie au-delà du montant 2 à l'opposé de la sangle 1. Le réglage de la course de déplacement en translation de l'organe mobile 5 est réalisé par vissage ou dévissage de l'écrou 61 par rapport à la vis 60. Cette course est limitée d'une part par l'entretoise 62 et d'autre part par l'écrou 61, lesquels servent de butée.

Dans le mode de réalisation représenté, un élément en forme de cloche 63 ou en forme de coupelle coopère avec l'écrou 61 et est monté autour de la tige 601. La concavité de l'élément en forme de cloche 63 est dirigée vers la sangle 1. L'élément en forme de cloche 63, ainsi que l'écrou 61, sont dimensionnés de telle sorte qu'ils sont aptes à être reçus à l'intérieur du manchon de l'orifice de section circulaire 24.

Dans le cas où chaque sangle 1 est reliée à chacun des deux montants 2 par un ensemble de liaison 3 selon la présente invention, un organe de mise sous tension 4 est prévu au niveau d'au moins l'un de ces ensembles de liaison 3. Dans le mode de réalisation préféré représenté, pour chaque sangle 1, un organe de mise sous tension 4 est prévu entre chacun des deux ensembles de liaison 3 et le montant 2 associé.

L'organe de mise sous tension 4 a pour fonction de tendre à rapprocher du montant 2 correspondant l'extrémité longitudinale 10 de la sangle 1 couplée à cet ensemble de liaison 3. En particulier, dans le mode de réalisation dans lequel l'organe de mise sous tension 4 est un organe de sollicitation élastique, un tel organe de mise sous tension 4 a pour fonction de solliciter en permanence l'extrémité longitudinale 10 de la sangle 1 en direction du montant 2 auquel ladite extrémité 10 est reliée, et donc de tendre la sangle 1 en permanence et de manière automatique et constante.

Dans le mode de réalisation préféré représenté, l'organe de mise sous tension 4 est un ressort de compression hélicoïdal.

Comme on peut le voir sur la Figure 5, le ressort 4 s'étend le long de l'axe de la tige 601 de l'organe de réglage 6 entre une première extrémité et une seconde extrémité. Plus précisément, le ressort 4 est monté autour de la tige 601. La première extrémité est en appui sur l'une des faces du montant 2. En particulier, pour plus de compacité, la première extrémité est en appui sur une paroi de fermeture 25 du montant 2 située dans le plan de la face du montant 2 côté sangle 1 (Figure 6). Cette paroi de fermeture 25 ferme l'extrémité du manchon 24 côté sangle 1 et est pourvue d'un orifice central dimensionné pour recevoir la tige 601 de la vis 60. La seconde extrémité est en appui sur la face de l'écrou 61 dirigée vers le montant 2, ou dans le cas où l'élément en forme de cloche 63 est présent, sur la face intérieure de l'élément en forme de cloche 63. Par ailleurs, le ressort 4, l'élément en forme de cloche 63 et le manchon 24 sont dimensionnés de telle sorte que le ressort 4, l'élément en forme de cloche 63 et l'écrou 61 sont aptes à être reçus à l'intérieur du manchon 24. En particulier, à l'état comprimé du ressort 4, le ressort 4 s'étend complètement à l'intérieur du manchon 24. A l'état non comprimé, à l'extension maximale du ressort 4, l'élément en forme de cloche 63 se trouve au niveau de l'extrémité ouverte du manchon 24, le ressort 4 étant alors dissimulé à l'intérieur du manchon 24 et de l'élément en forme de cloche 63. Ceci permet de procurer davantage de sécurité, le ressort 4 n'étant pas en contact direct avec l'extérieur du dispositif D, et de protéger le ressort 4 et donc d'en limiter l'usure. Dans ce mode de réalisation particulier, le ressort de compression 4 est donc positionné à l'intérieur du manchon 24 et entre la paroi de fermeture 25 du montant 2 et l'élément en forme de cloche 63. Lorsque l'organe mobile 5 est déplacé de manière à augmenter l'extension de l'organe mobile 5 entre l'extrémité 10 de la sangle 1 et le montant 2, le ressort 4 est comprimé (Figure 4) et applique un effort de poussée tendant à éloigner le montant 2 et l'écrou 61 l'un de l'autre, donc tendant à rapprocher du montant 2 l'extrémité longitudinale 10 de la sangle 1.

De préférence, la course du ressort de compression 4 est réglée pour être d'environ 60 mm. A titre d'exemple, les doigts de guidage 51 sont dimensionnés de telle sorte que lorsque le ressort 4 se déplace sur une course de 60 mm (extension du ressort), la longueur de doigt 51 faisant saillie au-delà de la face du montant 2 opposée à la sangle 1 est d'environ 54 mm.

La présente invention a également pour objet un véhicule V de transport de charges C équipé de dispositifs d'arrimage D de charges C selon la présente invention, le ou chaque dispositif d'arrimage D étant tel que décrit précédemment.

Le véhicule V de transport de charges C selon le mode de réalisation préféré de la présente invention comprend une plate-forme de chargement 7, deux dispositifs d'arrimage D et quatre ensembles pivotants 8.

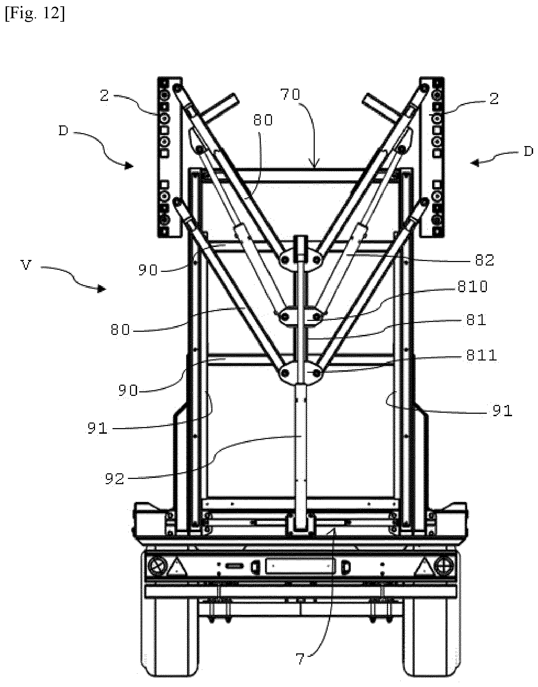

Le véhicule V représenté sur les Figures 1, 2 et 7 à 12 est un véhicule tracté de type remorque destiné à être attelé à un véhicule tracteur. Ce véhicule V présente un châssis s'étendant longitudinalement selon un axe longitudinal et équipé d'une plateforme de chargement 7 destinée à recevoir les charges C à transporter. Il convient de souligner que le véhicule V pourrait également être tout autre véhicule tracté, ainsi qu'un véhicule tracteur, par exemple de type camion équipé d'une plate-forme de chargement à l'arrière de la cabine du conducteur.

Par la suite les termes de « supérieur » ou « haute » et « inférieur » ou « basse » doivent être entendus selon la position en service du véhicule V, c'est-à-dire la position dans laquelle le châssis repose sur le sol sur lequel le véhicule V est destiné à rouler. Les termes « avant », « arrière » doivent donc être entendus selon la position en service du véhicule V et le sens d'avancement du véhicule V sur ledit sol lorsque le véhicule V avance.

La plate-forme de chargement 7 a une extrémité avant 7a, une extrémité arrière 7b et deux côtés latéraux 7c s'étendant entre les extrémités avant 7a et arrière 7b. Si l'on considère la direction longitudinale de la plate-forme 7, l'extrémité avant 7a correspond au bord transversal avant AV de la plate-forme 7, l'extrémité arrière 7b correspond au bord transversal arrière AR et les côtés latéraux 7c correspondent aux bords longitudinaux. Des cadres 70 avant et arrière sont fixés, respectivement, aux extrémités avant 7a et arrière 7b. Les cadres 70 s'étendent dans un plan perpendiculaire au plan de la plate-forme de chargement 7. Chaque cadre 70 est délimité par une paire de supports verticaux 70v reliés entre eux par deux supports horizontaux 70h.

Les deux dispositifs d'arrimage D sont agencés de chaque côté de la plate-forme 7. Autrement dit, l'un des dispositifs D s'étend le long de l'un des côtés latéraux 7c de la plate-forme 7 et l'autre dispositif D s'étend le long de l'autre côté latéral 7c de la plateforme 7. Ainsi, les deux dispositifs d'arrimage D sont positionnés en regard l'un de l'autre de chaque côté de la plate-forme 7. Plus précisément, chaque dispositif D a un montant 2 positionné au niveau de l'extrémité arrière 7b de la plate-forme 7 et un montant 2 positionné au niveau de l'extrémité avant 7a de la plate-forme 7, sensiblement dans l'alignement du bord longitudinal associé, les sangles 1 s'étendant le long dudit bord longitudinal de la plate-forme 7.

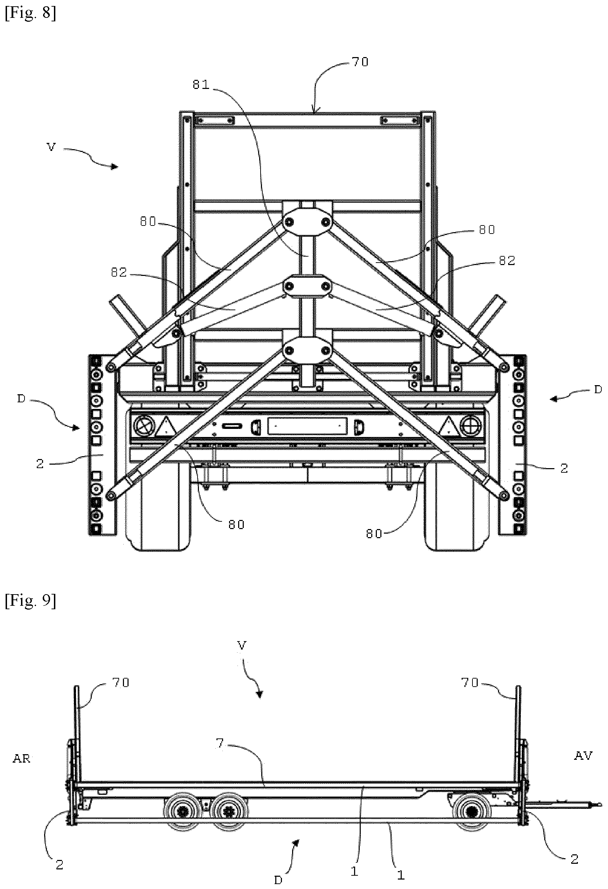

Chacun des quatre montants 2 représentés est relié à la plateforme de chargement 7 par l'intermédiaire d'un ensemble pivotant 8. Ainsi, le véhicule V représenté comporte quatre ensembles pivotants 8, dont deux ensembles pivotants 8 à l'extrémité avant 7a de la plate-forme de chargement 7 et deux ensembles pivotants 8 à l'extrémité arrière 7b de celle-ci. Ces ensembles pivotants 8 sont configurés de telle sorte que chaque dispositif d'arrimage D est mobile par rapport à la plate-forme de chargement 7 entre une position de chargement (Figures 8 et 9) et au moins une position de transport (Figures 1, 2, 7 et 10-12).

Lors du déplacement entre ces positions, chaque montant 2 est maintenu dans une position verticale. Dans la ou les positions de transport, les deux dispositifs D sont positionnés au-dessus de la plate-forme de chargement 7, à une hauteur permettant de bloquer latéralement les charges C portées par la plate-forme 7. En position de chargement, les montants 2 et les sangles 1 d'au moins l'un des deux dispositifs D sont positionnés au-dessous de la plate-forme de chargement 7 de manière à libérer l'accès à au moins l'un des côtés de la plate-forme 7.

De façon avantageuse, le fait que les deux dispositifs d'arrimage D sont montés mobiles par rapport à la plate-forme de chargement 7 permet de choisir quel dispositif D déplacer en fonction du côté par lequel on souhaite charger ou décharger la plate-forme 7.

Chaque ensemble pivotant 8 comprend une paire de bras 80. La paire de bras 80 comprend deux bras 80 parallèles entre eux et ayant chacun une extrémité articulée à un support 81 et une extrémité articulée au montant 2 associé. En particulier, l'un des bras 80, dit bras inférieur, a une extrémité reliée de manière pivotante à une région d'extrémité basse du support 81 associé, autour d'un axe de rotation horizontal et parallèle à l'axe longitudinal de la plate-forme 7, et une extrémité reliée de manière pivotante à l'extrémité basse du montant 2, autour d'un axe de rotation parallèle à l'axe de rotation de l'autre extrémité du bras 80. L'autre bras 80, dit bras supérieur, a une extrémité reliée de manière pivotante au support 81 associé, en une région d'extrémité haute du support 81 positionnée au-dessus du point d'articulation du bras 80 inférieur, autour d'un axe de rotation horizontal et parallèle à l'axe longitudinal de la plate-forme 7, et une extrémité reliée de manière pivotante à l'extrémité haute du montant 2, autour d'un axe de rotation parallèle à l'axe de rotation de l'autre extrémité du bras 80. Il convient de souligner que les bras 80 supérieur et inférieur peuvent être reliés aux extrémités haute et basse, respectivement, du montant 2 ou à des régions proches desdites extrémités. Ainsi, les deux bras 80, le montant 2 et le support 81 forment un parallélogramme déformable. L'axe de rotation entre chaque bras et le montant est configuré pour être démontable de telle sorte que le montant peut être séparé de la paire de bras et peut être à nouveau relié aux bras après retournement du montant.

La plate-forme 7 comporte des moyens 82 de déplacement automatisés de chaque ensemble pivotant 8 entre des positions abaissée et élevée. Les moyens 82 de déplacement des deux dispositifs D sont indépendants les uns des autres et les moyens 82 de déplacement d'un même dispositif D sont synchronisés.

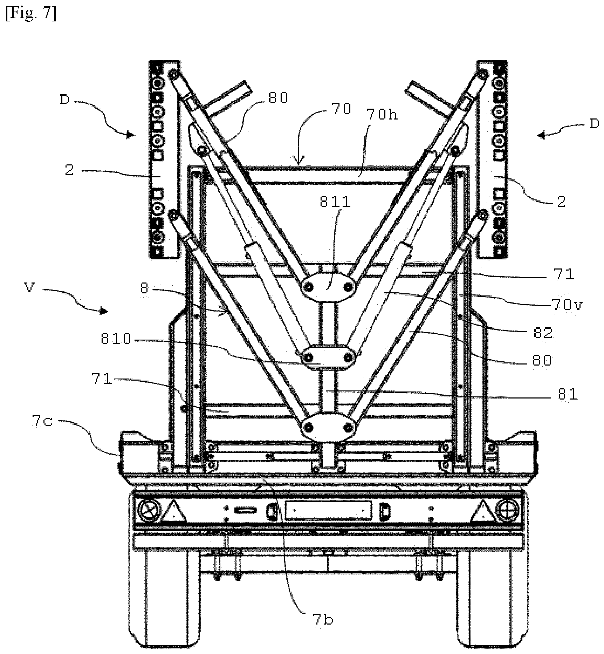

Dans les modes de réalisation représentés sur les Figures 7, 8 et 10 à 12, les moyens 82 de déplacement comportent un premier couple de vérins 82 associés à l'un des dispositifs D et un second couple de vérins 82 associés à l'autre dispositif D. Chaque vérin 82 permet de commander le mouvement de rotation du parallélogramme déformable associé autour de ses quatre axes de rotation.

Un premier vérin 82 du premier couple est monté à l'extrémité avant 7a de manière que son corps soit articulé autour d'un axe de rotation solidaire du support 81 avant et que sa tige soit articulée autour d'un axe de rotation solidarisé au bras 80 supérieur de l'ensemble pivotant 8 avant. De la même manière, le second vérin 82 du premier couple est articulé entre le support 81 arrière et le bras 80 supérieur de l'ensemble pivotant 8 arrière. L'axe de rotation entre le corps du vérin 82 et le support 81 est solidaire d'une platine 810 fixée au support 81, sensiblement à mi-longueur du support 81, et faisant saillie de part et d'autre du support 81, transversalement au support 81. Ainsi, l'axe de rotation est décentré par rapport à l'axe longitudinal du support 81.

Les vérins 82 du second couple sont montés de manière symétrique par rapport aux vérins 82 du premier couple.

Ainsi, l'extension des vérins 82 du premier couple de vérins, respectivement du second couple de vérins 82, provoque le déplacement du dispositif D associé vers une position élevée dite de transport. De manière correspondante, la rétraction des vérins 82 du premier couple de vérins 82, respectivement du second couple de vérins 82, provoque le déplacement du dispositif D associé vers la position abaissée dite de chargement.

Les paires de bras 80 des deux ensembles pivotants 8 situés au niveau de l'extrémité arrière 7b sont articulées sur un même support 81, dit support arrière. Les paires de bras 80 des deux ensembles pivotants 8 situés au niveau de l'extrémité avant 7a sont articulées sur un même support 81, dit support avant. L'axe de rotation entre chaque bras 80 et le support 81 associé est solidaire du support 81 par l'intermédiaire d'une platine 811 s'étendant dans le plan de l'ensemble pivotant 8 et dont les ailes font saillie de part et d'autre du support 81. Ainsi, les axes de rotation sont décentrés par rapport à l'axe longitudinal du support 81.

Chaque support 81 se présente sous la forme d'une potence s'étendant verticalement et couplée à la plate-forme de chargement 7. La potence est, de préférence, un tube creux à section carrée. A titre d'exemple, chaque support 81 peut avoir une longueur de 1,23 mètre et une section carrée de 10 cm par 10 cm. Chaque bras 80 peut avoir une longueur de 1,6 mètre et une section carrée de 80 cm de côté.

Dans le premier mode de réalisation, comme représenté sur les Figures 1, 2, 7 et 8, chaque support 81 est monté fixe par rapport à la plate-forme 7. En particulier, le support 81 avant a une extrémité inférieure solidaire de la plate-forme 7 au niveau du centre de l'extrémité avant 7a. Le support 81 arrière a une extrémité inférieure solidaire de la plate-forme 7 au niveau du centre de l'extrémité arrière 7b. De préférence, l'extrémité inférieure de chaque support 81 est rendue solidaire de la plate-forme 7 par vissage. Chaque support 81 est également solidaire de deux traverses 71 montées fixes par rapport au cadre 70 associé. Ces traverses 71 s'étendent parallèlement aux supports horizontaux 70h et sont espacées l'une de l'autre le long des supports verticaux 70v. Ces traverses 71 sont positionnées au niveau des platines 811 reliant chaque bras 80 au support 81.

Dans le deuxième mode de réalisation, comme représenté sur les Figures 9 à 12, chaque support 81 est monté mobile par rapport à la plate-forme 7 par l'intermédiaire d'un ensemble formant ascenseur 9, de sorte que chaque support 81 peut être positionné à une hauteur variable entre une position basse et une position haute.

L'ensemble formant ascenseur 9 permet un réglage en hauteur de la position du support 81, et donc des ensembles pivotants 8 associés. Ce mode de réalisation dans lequel chaque support 81 est mobile selon une direction de hauteur permet de positionner les sangles 1 à une hauteur plus élevée que dans le mode de réalisation à support fixe. Un tel ensemble formant ascenseur 9 permet donc de proposer un véhicule V davantage polyvalent et apte à s'adapter à différentes hauteurs de charges C.

Chaque ensemble formant ascenseur 9 comprend un chariot constitué par une paire de traverses 90 montées mobiles le long d'une paire correspondante de rails 91 solidaires du cadre 70 associé et un vérin vertical 92 configuré pour déplacer les traverses mobiles 90 le long des rails 91.

La paire de traverses 90 comprend une traverse supérieure et une traverse inférieure. Chaque traverse 90 porte, à chacune de ses deux extrémités, une roulette 900. Les roulettes 900 de la traverse 90 supérieure sont dirigées vers les roulettes 900 de la traverse 90 inférieure. L'axe de rotation de chaque roulette 900 est parallèle à l'axe des traverses 90. Les traverses 90 sont reçues dans le cadre 70 et s'étendent d'un support vertical 70v à l'autre, parallèlement aux supports horizontaux 70h. Chaque support vertical 70v du cadre 70 porte, sur sa face dirigée vers l'intérieur du cadre 70, un rail de guidage 91. Les deux rails de guidage 91 d'une même paire sont donc positionnés en regard l'un de l'autre. Chaque rail 91 se présente sous la forme d'un profilé en U s'étendant à partir du support horizontal 70h inférieur du cadre 70 et jusqu'à une région voisine du support horizontal 70h supérieur. Les rails 91 sont configurés pour recevoir les roulettes 900 afin de permettre le guidage du déplacement des traverses 90 le long des rails 91. Ainsi, les traverses 90 sont montées mobiles par rapport à la plate-forme 7, dans une direction perpendiculaire au plan de la plate-forme 7.

L'ensemble formant ascenseur 9 monté à l'extrémité arrière 7b de la plate-forme 7 est monté de manière symétrique par rapport à l'ensemble formant ascenseur 9 monté à l'extrémité avant 7a de la plate-forme 7.

Chaque support 81 est fixé à la traverse 90 supérieure au niveau de la platine 811 à laquelle est relié le bras 80 supérieur et est fixé à la traverse 90 inférieure au niveau de la platine 811 à laquelle est relié le bras 80 inférieur.

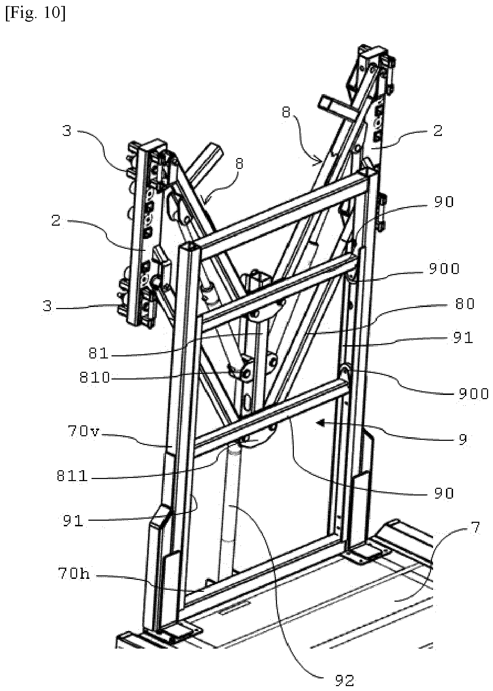

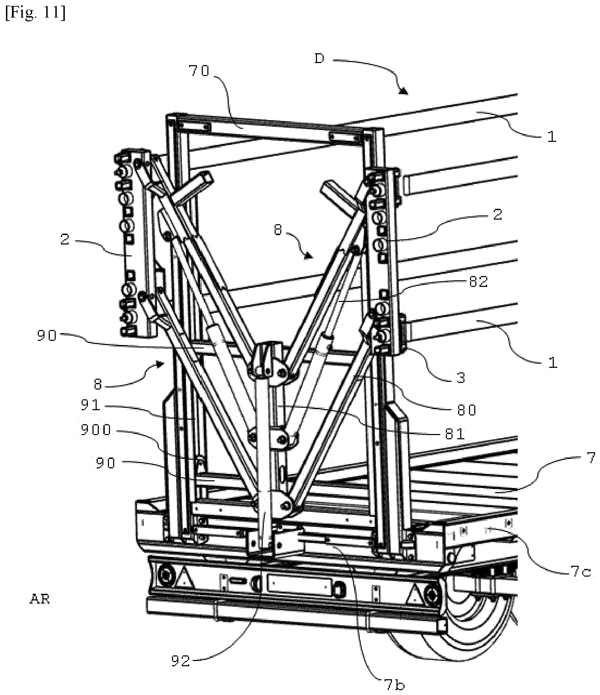

Le déplacement des traverses 90 le long des rails 91, et donc le déplacement du support 81 le long d'une direction verticale, est commandé par le vérin vertical 92. De préférence, le vérin vertical 92 est un vérin hydraulique. Ainsi, le véhicule V comprend un vérin vertical 92 à chaque extrémité avant 7a et arrière 7b. Le vérin vertical 92 s'étend verticalement parallèlement à l'axe longitudinal du support 81 et est compris dans le plan vertical longitudinal dans lequel est situé le support 81. Comme on peut le voir sur les Figures 10 et 11, le vérin vertical 92 est couplé d'une part au support 81 et d'autre part à la plate-forme 7. En particulier, le vérin vertical 92 a un corps relié à un axe inférieur horizontal perpendiculaire aux axes de rotation des bras 80 et solidaire du bord transversal du véhicule V, et une tige reliée à un axe supérieur parallèle à l'axe inférieur et solidaire du support 81, en particulier de la platine 811 au niveau de la région d'extrémité supérieure du support 81.

Les vérins verticaux 92 avant et arrière ont un fonctionnement synchronisé. Ainsi, une extension des vérins verticaux 92 permet de déplacer les supports 81 le long d'une direction verticale afin de faire varier, en particulier d'augmenter, la hauteur à laquelle peuvent être positionnés les supports 81 et donc les dispositifs D.

Si l'on considère l'application du véhicule V au transport de balles de fourrage, en particulier de balles de fourrage empilées sur trois rangs, la hauteur d'une balle de fourrage pouvant varier de 1 m à 1,20 m, la course de chaque vérin vertical 92 et donc de chaque support mobile 81 devra être réglée sur 60 cm afin de s'adapter à cette variation de hauteur.

En utilisation, en considérant que les dispositifs d'arrimage sont initialement dans une position de transport élevée, lorsqu'un utilisateur tel qu'un conducteur souhaite placer des charges C sur la plate-forme de chargement 7, les vérin verticaux 92 sont rétractés afin de déplacer les traverses mobiles 90 vers leur position basse, puis le couple de vérins 82 associés aux ensembles pivotants 8 de l'un des dispositifs d'arrimage D sont rétractés afin de positionner le dispositif d'arrimage D en position de chargement. Le conducteur peut alors charger les charges C sur la plate-forme 7 depuis le côté latéral 7c du véhicule V dont le dispositif d'arrimage D est en position de chargement. Une fois les charges C placées sur la plate-forme 7, si la hauteur totale des charges C n'est pas élevée, le couple de vérins 82 associés aux ensembles pivotants 8 du dispositif D qui a été placé en position de chargement sont étendus afin de déplacer le dispositif d'arrimage D vers une position de transport dans laquelle les sangles 1 viennent en appui latéral contre les charges C. Ainsi, les charges C sont maintenues en place entre les deux dispositifs d'arrimage D en position de transport et sont empêchées de se déplacer latéralement. Si la hauteur totale des charges C est élevée, les vérins verticaux 92 sont étendus afin de déplacer les traverses mobiles 90 vers la position haute. Ce déplacement des supports 81 vers une position plus élevée par rapport à la plate-forme 7 permet également de déplacer les dispositifs d'arrimage D à une hauteur plus élevée, et donc de positionner correctement les sangles 1 par rapport aux charges C à maintenir. Par ailleurs, afin de s'adapter plus précisément aux charges C à maintenir, chaque sangle 1 peut être positionnée à une hauteur appropriée entre les deux montants 2. Pour cela, il suffit au conducteur de séparer chaque ensemble de liaison 3 du montant 2 associé, après dévissage de l'écrou 61, et de le remonter à la hauteur souhaitée le long du montant 2, dans l'une des série d'orifices 23, 24 prévues. Pour décharger les charges C, il suffit alors de replacer au moins l'un des dispositifs d'arrimage D en position de chargement. Une fois les charges C déchargées du véhicule V, il est préférable de placer les deux dispositifs d'arrimage D en position de chargement. Cela permet de limiter l'usure des différentes pièces mobiles du véhicule V et également de limiter la hauteur totale du véhicule V.

Si l'on considère l'application du véhicule V selon la présente invention au transport de balles de fourrage, le véhicule V selon ce deuxième mode de réalisation permet de transporter aussi bien des balles de foin humide que des balles de paille plus volumineuses, sans avoir à changer de véhicule V.

Ainsi, par rapport à l'état antérieur de la technique connu, le véhicule V de transport de charges C selon ce deuxième mode de réalisation de l'invention présente l'avantage de s'adapter à davantage de chargements, à savoir à des charges C de différentes hauteurs.

Il convient de souligner que le véhicule V de transport de charges C selon le premier mode de réalisation de l'invention permet également de s'adapter à des charges C de différentes hauteurs. En effet, en plus de la possibilité de réglage de la position en hauteur des sangles 1 par modification de la position de chaque sangle 1 le long des montants 2 grâce à la pluralité de séries d'orifices 23, 24, il est possible de régler la position en hauteur des sangles 1 sans avoir besoin de déplacer les sangles 1 le long des montants 2. Pour cela, il suffit de démonter la paire de montants 2 démontables, de retourner les montants 2 et de les relier à nouveau aux ensembles pivotants 8 respectifs. Dans le cas où une sangle 1 se trouve au niveau de l'extrémité haute du montant 2 avant retournement, elle se trouvera au niveau de l'extrémité basse du montant 2 après retournement et sera donc positionnée à une hauteur différente.

Il est bien entendu que les modes de réalisation particuliers qui viennent d'être décrits ont été donnés à titre indicatif et non limitatif, et que des modifications peuvent être apportées sans que l'on s'écarte pour autant du cadre de la présente invention.

## Revendications

1. Dispositif d' arrimage (D) de charges (C), notamment de balles de fourrage, sur un véhicule (V) de transport de charges (C), lequel dispositif d'arrimage (D) comprend au moins un élément longiligne souple (1) dont les deux extrémités longitudinales (10) sont couplées à une paire de montants (2) verticaux parallèles, les montants (2) étant espacés l'un de l'autre de telle sorte que le ou chaque élément longiligne souple (1) s'étend horizontalement entre lesdits montants (2), au moins l'une des extrémités longitudinales (10) du ou de chaque élément longiligne souple (1) étant couplée au montant (2) respectif par l'intermédiaire d'un ensemble de liaison (3), lequel ensemble de liaison (3) est solidaire de ladite extrémité longitudinale (10) et coopère avec ledit montant (2), **caractérisé par le fait que** le ou chaque ensemble de liaison (3) est monté mobile en translation par rapport au montant (2) par l'intermédiaire d'une liaison glissière selon une direction orthogonale à un axe longitudinal du montant (2) et parallèle au plan comprenant la paire de montants (2).

2. Dispositif d' arrimage (D) selon la revendication 1, **caractérisé par le fait que**, pour le ou chaque élément longiligne souple (1), un organe de mise sous tension (4) est agencé entre le ou au moins l'un des ensembles de liaison (3) et le montant (2) correspondant de manière à tendre à rapprocher l'extrémité longitudinale (10) correspondante de l'élément longiligne souple (1) du montant (2).

3. Dispositif d'arrimage (D) selon la revendication 2, **caractérisé par le fait que** l'organe de mise sous tension (4) est un organe de sollicitation élastique, tel que notamment un ressort de compression, un ressort de traction, un ressort rotatif ou un vérin hydraulique, agissant sur l'ensemble de liaison (3) de manière à solliciter l'ensemble de liaison (3) vers une extension minimale de l'ensemble de liaison (3) entre l'extrémité longitudinale (10) de l'élément longiligne (1) et le montant (2).

4. Dispositif d'arrimage (D) selon l'une quelconque des revendications 1 à 3, **caractérisé par le fait que** le ou chaque ensemble de liaison (3) comprend un organe mobile (5) formant coulisseau et un organe de réglage (6) solidaire de l'organe mobile (5) et coopérant avec le montant (2) correspondant de manière à limiter le déplacement en translation de l'ensemble de liaison (3) par rapport au montant (2), la liaison glissière comportant des orifices traversants (23, 24) formant coulisse prévus le long du montant (2) correspondant et agencés de manière à recevoir de manière coulissante l'organe mobile (5) et l'organe de réglage (6).

5. Dispositif d'arrimage (D) selon la revendication 4, **caractérisé par le fait que** l'organe de réglage (6) est ensemble vis-écrou comprenant une vis (60) traversant le montant (2) selon un axe parallèle à la direction de translation, et un écrou (61) vissé sur la vis (60), le montant (2) étant interposé entre une tête (600) de la vis (60) et l'écrou (61), l'un ou l'autre parmi la tête (600) de la vis (60) et l'écrou (61) étant solidaire de l'organe mobile (5).

6. Dispositif d'arrimage (D) selon l'une des revendications 4 et 5, **caractérisé par le fait que** l'organe mobile (5) est une pièce en forme de U comprenant deux doigts de guidage (51), parallèles entre eux et orientés selon la direction de translation, les deux doigts (51) étant interconnectés par un axe (50) parallèle à l'axe longitudinal du montant (2) et auquel est reliée l'extrémité longitudinale (10) correspondante de l'élément longiligne souple (1).

7. Dispositif d'arrimage (D) selon la revendication 2 ou l'une quelconque des revendications 3 à 6 prise en dépendance de la revendication 2, **caractérisé par le fait que** le ou chaque élément longiligne souple (1) est une sangle (1).

8. Véhicule (V) de transport de charges (C), notamment de balles de fourrage, le véhicule (V) comprenant une plate-forme de chargement (7) ayant une extrémité avant (7a), une extrémité arrière (7b) et deux côtés latéraux (7c) s'étendant entre les extrémités avant (7a) et arrière (7b), le véhicule (V) étant **caractérisé par le fait qu'**il comprend au moins un dispositif d'arrimage (D) de charges (C) selon l'une quelconque des revendications 1 à 7, de préférence deux dispositifs d'arrimage (D), le ou chaque dispositif d'arrimage (D) s'étendant le long d'un côté latéral (7c) respectif de la plateforme de chargement (7), chaque montant (2) étant relié à la plate-forme de chargement (7) par l'intermédiaire d'un ensemble pivotant (8) respectif, de telle sorte que le ou chacun des dispositifs (D) est monté mobile vis-à-vis de la plate-forme de chargement (7) entre une position de chargement, dans laquelle le dispositif (D) est positionné au-dessous de la plate-forme (7), et au moins une position de transport, dans laquelle le dispositif (D) est positionné au-dessus de la plate-forme (7).

9. Véhicule (V) selon la revendication 8, **caractérisé par le fait que** chaque ensemble pivotant (8) comprend une paire de bras (80) parallèles, de même longueur et ayant chacun des première et seconde extrémités articulées respectivement à un support (81) solidaire d'une extrémité de la plate-forme de chargement (7) et au montant (2) correspondant de façon à former avec le montant (2) un parallélogramme déformable, chaque ensemble pivotant (8) comprenant en outre un vérin (82) articulé entre le support (81) et l'un des bras (80), de telle sorte qu'une rétraction ou une extension du vérin (82) provoque le pivotement de la paire de bras (80) autour de leurs premières extrémités et le déplacement du montant (2) entre les positions de chargement et de transport, les vérins (82) associés aux montants (2) d'un même dispositif d'arrimage (D) étant synchronisés, deux ensembles pivotants (8) agencés à une même extrémité de la plate-forme (7) étant reliés à un même support (81).

10. Véhicule (V) selon la revendication 9, **caractérisé par le fait que** chaque support (81) est monté mobile en hauteur par rapport à la plate-forme de chargement (7) par l'intermédiaire d'un ensemble formant ascenseur (9), lequel ensemble formant ascenseur (9) comprend un actionneur vertical (92), notamment un vérin vertical, monté entre la plate-forme de chargement (7) et le support (81), une paire de rails de guidage (91) verticaux fixés à l'extrémité correspondante de la plate-forme (7) et un chariot (90) monté mobile en translation verticale le long des rails (91), le support (81) étant solidaire du chariot (90), de telle sorte qu'un déplacement de l'actionneur (92) provoque un déplacement en translation verticale du support (81) par rapport à la plate-forme (7) entre une position basse et un position haute, les actionneurs verticaux (92) associés à chacun des deux supports (81) étant synchronisés.
